# NEUE EUROPÄISCHE PATENTSCHRIFT

(11) **EP 0 564 712 B2**
(45) Veröffentlichungstag und Bekanntmachung des Hinweises auf die Entscheidung über den Einspruch: **11.10.2000**
(45) Hinweis auf die Patenterteilung: 28.08.1996
(21) Anmeldenummer: 92121757.6
(22) Anmeldetag: 22.12.1992
(51) Int. Cl.: B05D 5/02, C09D 131/04, B41M 3/18, D06N 3/04, D21H 19/20

(54) **Verfahren zum Herstellen dreidimensional oberflächenstrukturierter Beläge für Wand- und Bodenflächen und Strukturpaste dafür**
Process for the preparation of three-dimensional structured surface coatings for wall and floor areas and paste therefor
Procédé de préparation de revêtement à surface tridimensionnelle et structurée pour murs et sols, et pâte destinée à cet usage

(30) Priorität: 02.04.1992 DE 4210922
(43) Veröffentlichungstag der Anmeldung: 13.10.1993
(73) Patentinhaber: MARBURGER TAPETENFABRIK J.B. SCHAEFER GMBH & CO. KG, D-35274 Kirchhain (DE)
(72) Erfinder: Petridis, Dimitrios, W-3575 Kirchhain 1 (DE)
(74) Vertreter: Fuchs Mehler Weiss & Fritzsche

(56) Entgegenhaltungen:
- EP-A- 0 525 639
- DE-A- 2 501 684
- DE-A- 2 733 040
- FR-A- 2 470 782
- FR-A- 2 673 209
- GB-A- 1 139 568
- GB-A- 1 157 040
- GB-A- 1 442 823

## Beschreibung

Die Erfindung betrifft ein Verfahren zum Herstellen dreidimensional oberflächenstrukturierter Beläge für Wand- und Bodenflächen, insbesondere zum Herstellen von Strukturtapeten nach dem Oberbegriff des Patentanspruches 1. Die Erfindung betrifft ferner eine Strukturpaste zur Verwendung bei dieser Herstellung.

Fußbodenbeläge, Wandbeläge und insbesondere Tapeten mit einer strukturierten, reliefartigen Oberfläche sind bekannt. Zur Herstellung der reliefartigen Strukturen werden bei bekannten Verfahren entweder treibmittelfreie Kompaktplastisole oder treibmittelhaltige Schaumplastisole jeweils auf der Basis von Polyvinylchlorid (PVC) verwendet.

Die Plastisolpaste wird je nach Art der zu erzeugenden Struktur mittels bekannter Auftragsverfahren, insbesondere Druckverfahren, auf eine geeignete Substratbahn aufgetragen, die aus unterschiedlichen Materialien, insbesondere Kunststoffmaterialien bestehen kann, im Fall von Strukturtapeten aber in überwiegendem Maße ein Tapetenrohpapier ist. Geeignete Verfahren für den Auftrag sind das Rotations-Siebdruckverfahren, das Flach-Siebdruckverfahren, das Rotations-Tiefdruckverfahren, das Quetschtiefdruckverfahren, Hochdruckverfahren, Streichverfahren und Spritzverfahren.

PVC-Plastisolpasten weisen nach ihrer Verfestigung auf der Substratbahn Eigenschaften auf, die ihnen einen allgemeinen Einsatz für den hier betroffenen Zweck verschafft haben. Sie sind gut lichtbeständig, hoch waschbeständig, kratzfest, bleiben auch im verfestigten Zustand noch genügend weich-flexibel, lassen sich durch die Mitverwendung von Treibmitteln zu verhältnismäßig leichtgewichtigen Strukturen verarbeiten, sind strapazierfähig und auch schwer entflammbar. Die PVC-Plastisole weisen aber auch verschiedene Nachteile auf. So erfordern sie für das Gelieren und Aufschäumen verhältnismäßig hohe Verarbeitungstemperaturen im Bereich von 180°C bis 230°C, ferner vermindern sie die Atmungsaktivität der Wände und sind nikotinempfindlich (Verfärbung). Der größte Nachteil der PVC-Plastisole liegt aber in ihrem chemischen Ursprung, da sie chlorhaltige Verbindungen sind, die zu Umweltproblemen führen können. Die Polyvinylchloride sind im wesentlichen unverrottbar, weswegen ihre Entsorgung im allgemeinen nur durch Verbrennen stattfinden kann. Hierbei scheiden sie schädliche Salzsäuredämpfe ab, was im übrigen auch im Brandfalle auftritt und zu erheblicher Gefahr für den Menschen werden kann. Weiterhin enthalten die PVC-Plastisole grundsätzlich Weichmacher, im wesentlichen Phthalate, die zum Teil bei der Verarbeitung frei werden und kostspielige Erfassungs- und Verbrennungsanlagen erfordern.

Beschichtungszusammensetzung auf der Basis von Vinylacetatcopolymerdispersion und (an)organischen Füllstoffen sind aus der GB-A-1 139 568, der GB-A-1 442 823 und der DE-A-2 733 040 bekannt.

Die GB-A-1 139 568 offenbart eine Beschichtungszusammensetzung, die einen Latex (z.B. Ethylen-Vinylacetat-Copolymer EVA) und einen mineralischen Füllstoff (z.B. Kaolin) enthält. Andere Zusatzstoffe wie etwa Stärke oder Titandioxid können ebenfalls enthalten sein.

Die GB-A-1 442 823 offenbart Materialien, die als Bindemittel beispielsweise Ethylen-Vinylacetat-Copolymer-Dispersionen, als organisehen Füllstoff beispielsweise thermisch expandierbare, thermoplastische Mikroperlen und weitere Zusatzstoffe enthalten.

In der DE-A-2 733 040 wird ein Beschichtungsmittel beansprucht, das ein filmbildendes Bindemittel (z.B. EVA) und einen Füllstoff (z.B. kugelförmige Kapseln), der sich aus organischen und anorganischen Materialien zusammensetzt, enthält.

Der Erfindung liegt die Aufgabe zugrunde, ein Verfahren zum Herstellen dreidimensional oberflächenstrukturierter Beläge für Wand-, Decken- und Bodenflächen zu schaffen, bei dem Strukturierungspasten eingesetzt werden, die im wesentlichen frei von PVC und Weichmachern sind, sich problemlos nach den bisher üblichen Auftragsverfahren verarbeiten lassen und zu hoher Erzeugnisqualität führen. Aufgabe der Erfindung ist ferner die Bereitstellung einer besonderen, im wesentlichen PVC- und Weichmacher-freien Strukturpaste für das Herstellen von oberflächenstrukturierten Belägen.

Verfahrensmäßig wird diese Aufgabe erfindungsgemäß grundsätzlich durch die kennzeichnenden Merkmale des Patentanspruches 1 gelöst. Eine geeignete Strukturpaste ist grundsätzlich durch den Patentanspruch 7 gekennzeichnet.

Im folgenden wird die Erfindung der Einfachheit halber nur in ihrer Anwendung auf die Herstellung von Strukturtapeten beschrieben, wobei dem Fachmann klar ist, daß das beschriebene Herstellungsverfahren ebenso auf andere strukturierte Gegenstände anwendbar und somit insbesondere auch für die Herstellung anderer Wand- und Bodenbeläge geeignet ist. Auch ist das Substrat keinesfalls auf das bei der Herstellung von Strukturtapeten üblicherweise verwendete Tapetenrohpapier beschränkt. Das Substrat kann aus unterschiedlichsten Materialien bestehen, insbesondere können für die Herstellung von Strukturtapeten auch in geeigneter Weise vorbeschichtete Tapetenrohpapiere zum Einsatz kommen.

Es wurde in eingehenden Versuchen ermittelt, daß qualitativ hochwertige Strukturoberflächen unter Verwendung von Strukturpasten erhalten werden können, die auf Polymerdispersionen von Vinylacetat-Copolymeren beruhen und dazu geeignete Füllstoffe bzw. Pigmente in einem wässrigen System enthalten. Das wässrige System hat den Vorteil, daß die Strukturpasten durch einfaches Trocknen bzw. Eindampfen verfestigt werden können, wobei keine schädlichen Abdämpfe entstehen. Die Trocknung kann bei Temperaturen zwischen 40 und 200°C erfolgen, was gegenüber der Verwendung von PVC-Plastisolen einen weiteren Vorteil bedeutet.

Auch die erfindungsgemäße Strukturpaste läßt sich nach den eingangs erwähnten, für PVC-Plastisole bisher üblichen Auftragsverfahren verarbeiten. Eine weitere Oberflächenveredlung der verfestigten Strukturen, beispielsweise durch Bedrucken, Lackieren, Beflocken oder dergl. ist ohne weiteres möglich.

Als bevorzugt geeignet für die erfindungsgemäße Strukturpaste hat sich eine Polymerdispersion auf der Basis eines Vinylacetat-Ethylen-Copolymerisates (EVA) erwiesen, die als eine 50 bis 55 %ige, weichmacherfreie Dispersion dieses Copolymerisates in Wasser erhältlich ist. Diese Dispersion führt zu guten Fließeigenschaften der Strukturpaste, sie gewährleistet eine ausreichende Bindung der anderen Komponenten der Paste untereinander, weist eine gute Adhäsion zum Substrat auf und führt nach dem Trocknen zu einer dauerflexiblen Struktur.

Es haben sich aber auch andere Polymerdispersionen, beispielsweise auf der Basis von Vinylacetat-maleinsäuredi-n-butylester und Vinylacetat-acrylsäureester als geeignet erwiesen.

Die erfindungsgemäßen Strukturmasse enthält auf 1 Gewichtsteil anorganische und organische Füllstoffe 0,8-2,0 Gewichtsteile einer 50-55 %igen Vinylacetat-Copolymer-Dispersion.

Als organischer Füllstoff für die Strukturpaste wird unverkleisterte Stärke verwendet, wobei durch Oxidation modifizierte Maisstärke ausgenommen ist und vorzugsweise Kartoffelstärke eingesetzt wird. Die unverkleisterte Stärke weist ein gutes Füllvermögen auf, ohne daß die Strukturmasse schwerer wird, da die Stärke leichter als die anorganischen Füllstoffe ist. Ferner ist sie biologisch leicht und vollständig abbaubar, was sich auf die Abbaubarkeit der Strukturpaste positiv auswirkt. Da die unverkleisterte Stärke mit den anorganischen Füllstoffen eine Einheit bildet, egal ob die anorganischen Füllstoffe Calciumcarbonate oder Aluminiumhydroxide sind, kann sie als teilweiser Ersatz von anorganischen Füllstoffen angesehen werden.

Darüber hinaus ist die unverkleisterte Stärke kaltwasserunlöslich und wird erst mit steigender Temperatur angelöst. Diese Eigenschaft bringt produktionstechnische Vorteile. Die Trocknungstemperatur und Trocknungsdauer kann so gewählt werden, daß die Stärkepartikelchen an ihrer Oberfläche durch die Temperatur und die Wasserfeuchtigkeit der Rezeptur leicht angelöst werden und sich miteinander und mit den anderen Füllstoffen zu einer Einheit verbinden. Dadurch erhält man eine bessere Festigkeit der Strukturmasse.

Zusätzlich bindet die Stärke einen erheblichen Anteil des Wassers und gibt dieses beim Trocknen langsam ab. Dadurch wird ein rasches Verdunsten, was zur Blasenbildung führen könnte verhindert.

Die Gesamtfüllstoffe enthalten mindestens 10 Gew.-%, vorzugsweise jedoch 25-40 Gew.-% unverkleisterte Stärke als organischen Füllstoff. Die unverkleisterte Stärke liegt in Pulverform vor, vorzugsweise mit einer Korngröße von 10-100 µm.

Als anorganische Füllstoffe für die Strukturmasse kommen vornehmlich Aluminiumhydroxid (Al(OH)₃) und Calciumcarbonat (CaCO₃) in Betracht. Es kann aber auch ein gewisser Zusatz von Titandioxid (TiO₂) als zusätzliches Weißpigment von Vorteil sein. Der Einsatz von Titandioxid kann bis zu 10 Gew.-% der gesamten anorganischen und/oder organischen Füllstoffe betragen.

Das Aluminiumhydroxid als Füllstoff wird vorzugsweise mit einer Korngröße von 20-25 µm eingesetzt. Das Calciumcarbonat ist vorzugsweise ein solches mit einer Korngrößenverteilung von 5-30 µm und weist eine Ölzahl von 15 auf. Bei Titandioxid kommt vorzugsweise die Rutil-Modifikation zum Einsatz. Abweichungen von den vorstehenden Füllstoffspezifikationen sind aber moglich.

Desweiteren hat es sich als äußerst vorteilhaft erwiesen, dem System eine gewisse Menge an einem organischen Verarbeitungsverzögerer zuzufügen. Es wurde gefunden, daß der Zusatz von 1-8 Gew.-% nicht kristallisierendem Sorbitsirup, bezogen auf die Gesamtpaste, für deren Verarbeitung sehr vorteilhaft ist, da zusätzlich zur Verarbeitungsverzögerung auch noch die Viskosität der Strukturpaste positiv beeinflußt wird.

Der nichtkristallisierende Sorbitsirup kann ggf. auch durch Ethylenglykol oder andere organische Lösungsmittel mit entsprechenden Eigenschaften ersetzt werden. So wurde gefunden, daß auch der Zusatz von 1-5 Gew.-% Ethylenglykol, bezogen auf die Gesamtpaste, für deren Verarbeitung in bestimmten Fällen vorteilhaft ist.

Gegebenenfalls kann auch der Zusatz von Hydrophobiermitteln zur Stukturpaste vorteilhaft sein, um der herzustellenden Strukturtapete in einem bestimmten Maße einen wasserabweisenden Charakter zu verleihen. Es hat sich gezeigt, daß dies durch Zusatz von 1-3 Gew.-% Paraffindispersion, bezogen auf die Gesamtpaste, erreicht werden kann.

Um das spezifische Gewicht der getrockneten Strukturpaste zu verringern bzw. um deren Strukturausbildung auch noch beim Trocknen zu verstärken, können der Strukturpaste in verhältnismäßig geringen Gewichtsmengen entsprechende Zusatzmittel zugegeben werden.

Um das spezifische Volumen der Strukturpaste noch wahrend der Verarbeitung, insbesondere während des Trocknens vergrößern zu können, hat es sich als vorteilhaft erwiesen, der Gesamtpaste etwa 1-8 Gew.-% an sog. Mikroperlen zuzusetzen. Mikroperlen sind mit Treibmittel gefüllte Mikrokapseln mit einem Durchmesser von etwa 10-20 µm aus thermoplastischem Kunststoff, die sich bei 120-140°C auf das Mehrfache ihres Volumens ausdehnen. Diese Mikroperlen weisen beispielsweise Polymerhüllen auf der Basis von Methylmethacrylat oder auch einem Acrylnitril-Copolymer auf. Bevorzugt werden Ausführungsformen eingesetzt, die ein Expansionsverhältnis von etwa 20 aufweisen. Diese Mikroperlen übernehmen bei der erfindungsgemäßen Strukturpaste teilweise die Funktion des Treibmittels bei den herkömmlichen PVC-Plastisolen.

Darüber hinaus kann, zur Verringerung des spezifischen Gewichtes der Füllstoffe bzw. der Erhöhung des spezifischen Volumens der getrockneten Paste, der Gesamtpaste ein Anteil von etwa 1-5 Gew.-% sog. Mikrohohlkugeln zugesetzt werden. Es handelt sich dabei um expandierte Polymerhohlkugeln, in deren Oberfläche vorteilhafterweise anorganische Füllstoffe eingebettet sind. Der Durchmesser solcher Mikrohohlkugeln liegt vorzugsweise im Bereich von 10-80 µm, ihr spezifisches Volumen beträgt etwa 0,15 g/cm². Durch das Polymermaterial der Mikrokugelwände und der daran angelagerten anorganischen Füllstoffteilchen handelt es sich bei den Mikrohohlkugeln praktisch um einen gemischt organisch-anorganischen Füllstoff mit sehr hohem spezifischen Volumen.

Dem Fachmann ist geläufig, welche Viskosität eine Strukturpaste in etwa haben muß, um in einem bestimmten Auftragsverfahren verarbeitet werden zu können. Diese Viskosität kann bei der erfindungsgemäßen Paste durch entsprechende Wasserzugabe reguliert werden.

Selbstverständlich können der erfindungsgemäßen Strukturpaste zur Beeinflussung ihres äußeren Erscheinungsbildes beispielsweise auch noch Farbpigmente oder Farbstoffe zugegeben werden. Auch kann es für die Verarbeitung erforderlich sein, der Zusammensetzung in geringen Mengen Biozide oder einen Entschäumer zuzusetzen, falls sich dies als erforderlich erweisen sollte. Derartige Zusatzstoffe sind dem Fachmann geläufig.

Zwei bevorzugte Zusammensetzungstypen der erfindungsgemäßen Strukturpaste in Gewichtsteilen sind wie folgt:
- 240-360 G.T.: einer 50-55 %igen weichmacherfreien EVA-Dispersion
- 5- 50 G.T.: nicht kristallisierenden Sorbitsirup
- 10- 50 G.T.: Mikroperlen
- 300 G.T.: Al(OH)₃ und unverkleisterte Stärke
- 5- 30 G.T.: Wasser als Viskositätseinstellmittel.
oder:
- 240-360 G.T.: einer 50-55 %igen weichmacherfreien EVA-Dispersion
- 6- 30 G.T.: Ethylenglykol
- 6- 30 G.T.: Mikroperlen
- 230 G.T.: Al(OH)₃ und/oder CaCO₃
- 6- 30 G.T.: Mikrohohlkugeln
- 25- 35 G.T.: Wasser als Viskositätseinstellmittel

Diesen Zusammensetzungen können noch bis zu 30 Gewichtsteile Titandioxid vom Rutiltyp zugegeben werden. Außerdem können die Zusammensetzungen, wie oben erwähnt, noch durch Farbpigmente, Farbstoffe, Entschäumer, Biozide und ähnliche in geringen Mengen einzusetzende Zusatzmittel ergänzt werden.

Eine Strukturpaste der vorstehend wiedergegebenen Zusammensetzungen erfüllt alle an sie gestellten Anforderungen. Sie ist gut lichtbeständig, hoch waschbeständig, kratzfest, strapazierfähig, bleibt weich-flexibel und läßt sich darüber hinaus relativ leichtgewichtig ausführen. Sie ist ferner schwer entflammbar, wozu der relativ hohe Anteil an Aluminiumhydroxid beiträgt. Gegenüber den herkömmlichen PVC-Plastisolstrukturen weist sie die zusätzlichen Vorteile auf, daß sie PVC- und weichmacherfrei ist, eine gute Wasserdampfdurchlässigkeit aufweist und nikotinunempfindlich ist, und beim Verbrennen keine chlorhaltigen Verbindungen, insbesondere keine Salzsäuredämpfe abspaltet. Sie enthält ferner keine Lösung, die bei der Verarbeitung stören bzw. aufgefangen werden müßten und läßt sich bei verhältnismäßig niedrigen Temperaturen verfestigen, was insgesamt zu einer Energieeinsparung bei der Verarbeitung führt. Schließlich ist die erfindungsgemäße Strukturpaste auch noch biologisch leicht abbaubar.

### Ausführungsbeispiele

### Beispiel 1:

Es wurde eine Strukturpaste aus den im folgenden wiedergegebenen Mengen an Ausgangsstoffen zusammengemischt:
- 280 G.T.: einer 50-55 %igen, weichmacherfreien EVA-Dispersion
- 200 G.T.: Al(OH)₃ mit einer Korngrößenverteilung von 20-25 µm
- 100 G.T.: einer unverkleisterten Stärke
- 20 G.T.: TiO₂ vom Rutiltyp
- 37,5 G.T.: Mikroperlen
- 45 G.T.: eines nicht kristallisierenden Sorbitsirups
- 20 G.T.: Paraffindispersion und
- 10 G.T.: Wasser als Viskositätseinstellmittel.

Die EVA-Dispersion, der nicht kristallisierende Sorbitsirup und das Wasser wurden in einem Rührbehälter vorgelegt und langsam verrührt. Während des Rührens wurden die unverkleisterte Stärke, die Mikroperlen, das Aluminiumhydroxid, das Titandioxid und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Siebdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

### Beispiel 2:

Es wurde eine Strukturpaste aus den im folgenden wiedergegebenen Mengen an Ausgangsstoffen zusammengemischt:
- 320 G.T.: einer 50-55 %igen, weichmacherfreien EVA-Dispersion
- 200 G.T.: Al(OH)₃ mit einer Korngrößenverteilung von 20-25 µm
- 100 G.T.: einer unverkleisterten Stärke
- 15 G.T.: Mikroperlen
- 10 G.T.: eines nicht kristallisierenden Sorbitsirups
- 7,5 G.T.: Paraffindispersion und
- 25 G.T.: Wasser als Viskositätseinstellmittel.

Die EVA-Dispersion, der nicht kristallisierende Sorbitsirup und das Wasser wurden in einem Rührbehälter vorgelegt und langsam verrührt. Während des Rührens wurden die unverkleisterte Stärke, die Mikroperlen, das Aluminiumhydroxid und die Paraffindispersion nacheinander langsam hinzugegeben. Nach etwa 30 min Rührzeit war die Paste gebrauchsfertig.

Auf ein Polymervlies als Substrat mit einem Flächengewicht von 50 g/m² und einer Breite von 110 cm wurde mit der Paste im Tiefdruckverfahren bei einer Geschwindigkeit von 40 m/min eine Tapetenstruktur aufgetragen. Diese Struktur wurde bei etwa 150°C 35 sec lang getrocknet. Die so hergestellte Strukturtapete erfüllte alle an sie gestellten Anforderungen.

## Patentansprüche

1. Verfahren zum Herstellen dreidimensional obeflächenstrukturierter Beläge für Wand- und Bodenflächen, insbesondere von Strukturtapeten, bei dem eine Strukturpaste mittels geeigneter Auftragsverfahren in gewünschter Struktur auf eine Substratbahn aufgetragen und dann auf der Substratbahn verfestigt wird, dadurch gekennzeichnet, daß eine Strukturpaste auf der Basis einer Vinylacetat-Copolymer-Dispersion verwendet wird, die mindestens einen anorganischen Füllstoff und mindestens 10 Gew.-%, bezogen auf den Gesamtanteil an Füllstoffen, unverkleisterte Stärke als organischen Füllstoff sowie erforderlichenfalls Lösungs- und/oder Verdünnungsmittel enthält, wobei die Strukturpaste auf 1 Gewichtsteil anorganische und organische Füllstoffe 0,8 bis 2,0 Gewichtsteile einer 50-55 %igen Vinylacetat-Copolymer-Dispersion enthält, wobei durch Oxidation modifizierte Maisstärke ausgenommen ist.

2. Verfahren nach Anspruch 1, dadurch gekennzeichnet, daß als ein Verdünnungsmittel Wasser verwendet wird, mit dem die Strukturpaste auf eine geeignete Verarbeitungsviskosität eingestellt wird.

3. Verfahren nach Anspruch 1 oder 2, dadurch gekennzeichnet daß das Auftragen der Strukturpaste auf die Substratbahn nach dem Rotationssiebdruckverfahren, dem Flach-Siebdruckverfahren, dem Rotations-Tiefdruckverfahren, dem Quetsch-Tiefdruckverfahren, dem Hochdruckverfahren, einem Streichverfahren oder einem Spritzverfahren erfolgt.

4. Verfahren nach mindestens einem der Ansprüche 1 bis 3, dadurch gekennzeichnet, daß die Strukturpaste auf der Substratbahn durch Trocknen verfestigt wird.

5. Verfahren nach Anspruch 4, dadurch gekennzeichnet, daß das Trocken bei Temperaturen von 40°C bis 200°C erfolgt.

6. Verfahren nach mindestens einem der Ansprüche 1 bis 5, dadurch gekennzeichnet, daß die verfestigte Strukturpaste einer weiteren Oberflächenveredelung, insbesondere einem Bedrucken, Lackieren und/oder Beflocken unterworfen wird.

7. Strukturpaste, enthaltend eine Polymerdispersion auf der Basis eines Vinylacetat-Copolymers, mindestens einen anorganischen Füllstoff und mindestens 10 Gew.-%, bezogen auf den Gesamtanteil an Füllstoffen, unverkleisterte Stärke als organischen Füllstoff sowie erforderlichenfalls Lösungs- und/oder Verdünnungsmittel, wobei die Strukturpaste auf 1 Gewichtsteil anorganische und organische Füllstoffe 0,8 bis 2,0 Gewichtsteile einer 50-55 %igen Vinylacetat-Copolymer-Dispersion enthält, wobei durch Oxidation modifizierte Maisstärke ausgenommen ist.

8. Strukturpaste nach Anspruch 7, dadurch gekennzeichnet, daß die Polymerdispersion eine weichmacherfreie Dispersion eines Vinylacetat-Ethylen-Copolymerisats (EVA) ist.

9. Strukturpaste nach Anspruch 7 oder 8, dadurch gekennzeichnet, daß die anorganischen Füllstoffe im wesentlichen Al(OH)₃ und/oder CaCO₃ sind.

10. Strukturpaste nach mindestens einem der Ansprüche 7 bis 9, dadurch gekennzeichnet, daß die Füllstoffe bis zu 10 Gew.-% TiO₂ einschließen.

11. Strukturpaste nach mindestens einem der Ansprüche 7 bis 10, dadurch gekennzeichnet, daß der Gesamtfüllstoff 25-40 Gew.-% unverkleisterte Stärke als organischen Füllstoff und als Restfüllstoff im wesentlichen Al(OH)₃ als anorganischen Füllstoff enthält.

12. Strukturpaste nach mindestens einem der Ansprüche 7 bis 11, dadurch gekennzeichnet, daß sie als Verarbeitungsverzögerungsmittel nicht kristallisierenden Sorbitsirup oder Ethylenglykol enthält.

13. Strukturpaste nach Anspruch 12, dadurch gekennzeichnet, daß Sorbitsirup in einer Menge von 1-8 Gew.-%, bezogen auf die Gesamtpaste enthält.

14. Strukturpaste nach mindestens einem der Ansprüche 7 bis 13, dadurch gekennzeichnet, daß sie als Expansionsmittel Mikroperlen enthält.

15. Strukturpaste nach Anspruch 14, dadurch gekennzeichnet, daß die Menge an Mikroperlen 1-8 Gew.-%, bezogen auf die Gesamtpaste beträgt.

16. Strukturpaste nach Anspruch 8, im wesentlichen enthaltend:
240-360 G.T. einer 50-55 %igen weichmacherfreien EVA-Dispersion
5-50 G.T. nicht kristallisierenden Sorbitsirup
10-50 G.T. Mikroperlen
300 G.T Al(OH)₃ und unverkleisterte Stärke
5-30 G.T. Wasser als Viskositätseinstellmittel, wobei die Strukturpaste auf 1 Gewichtsteil anorganische und organische Füllstoffe 0,8 bis 2,0 Gewichtsteile einer 50-55 %igen Polymerdispersion enthält.

17. Strukturpaste nach Anspruch 16, dadurch gekennzeichnet, daß sie 100 G.T. unverkleisterte Stärke enthält.

18. Strukturpaste nach Anspruch 16 oder 17, dadurch gekennzeichnet, daß sie 5-25 G.T. Paraffindispersion enthält.

19. Strukturpaste nach Anspruch 16, 17 oder 18, dadurch gekennzeichnet, daß sie zusätzlich 5-30 Gewichtsteile TiO₂ vom Rutiltyp enthält.

20. Strukturpaste nach Anspruch 16, 17, 18 und 19, im wesentlichen enthaltend:
280 G.T. einer 50-55 %igen, weichmacherfreien EVA-Dispersion
200 G.T. Al(OH)₃ mit einer Korngrößenverteilung von 20-25 µm
100 G.T. einer unverkleisterten Stärke
20 G.T. TiO₂ vom Rutiltyp
37,5 G.T. Mikroperlen mit einem Korndurchmesser von 10-20 µm und einem Expansionsverhältnis von 20
45 G.T. eines nicht kristallisierenden Sorbitsirups
20 G.T. Paraffindispersion und
10 G.T. Wasser als Viskositätseinstellmittel.

21. Strukturpaste nach Anspruch 16, 17 und 18, im wesentlichen enthaltend:
320 G.T. einer 50-55 %igen, wichmacherfreien EVA-Dispersion
200 G.T. Al(OH)₃ mit einer Korngrößenverteilung von 20-25 µm
100 G.T. einer unverkleisterten Stärke
15 G.T. Mikroperlen mit einem Korndurchmesser von 10-20 µm und einem Expansionsverhältnis von 20
10 G.T. eines nicht kristallisierenden Sorbitsirups
7,5 G.T. Paraffindispersion und
25 G.T. Wasser als Viskositätseinstellmittel.

22. Strukturpaste nach mindestens einem der Ansprüche 7 bis 21, dadurch gekennzeichnet, daß sie zusätzlich Farbstoffe, Farbpigmente, Biozide und/oder Entschäumer enthält.

23. Verwendung einer Strukturpaste nach mindestens einem der Ansprüche 7 bis 22 zur Herstellung von Strukturtapeten.

## Claims

1. A method for making three-dimensional surface-textured coverings for walls and floors, in particular textured wallpaper, in which a structural paste is applied by a suitable method to a substrate sheeting, and becomes set thereon, characterised in that a structural paste based on a vinyl acetate copolymer dispersion is used, which contains at least an inorganic filler material and at least 10 weight%, referred to the total of fillers, of unpasted starch as organic filler, and if needed also solvents and/or thinners, whereby the structural paste contains on 1 part by weight of inorganic and organic fillers 0.8-2.0 parts by weight of a 50-55% vinyl acetate copolymer dispersion, whereby corn starch modified by oxidation is excluded.

2. A method as claimed in claim 1, characterised in that water is used as a thinner, which is used to set the structural paste to a suitable viscosity for the work.

3. A method as claimed in claim 1 or 2, characterised in that is the application of the structural paste to the substrate sheeting is effected by way of a rotoscreen, flat screen, rotogravure, squeeze intaglio, letterpress, spread coating or jet spraying process.

4. A method according to at least one of the claims 1 through 3, characterised in that the structural paste becomes set on the substrate sheeting by drying.

5. A method as claimed in claim 4, characterised in that the drying is effected at temperatures of 40°C through to 200°C.

6. A method according to at least one of claims 1 through 5, characterised in that the set structural paste is subjected to a further surface treatment, in particular printing, laquering and/or flock-coating.

7. A structural paste, containing a polymer dispersion based on a vinyl acetate copolymer, at least one inorganic filler material and at least 10 weight%, referred to the total of filler materials, of unpasted starch as organic filler and if required solvents and/or thinners, whereby the structural paste on 1 part by weight of inorganic and organic filler material contains 0.8-2.0 parts by weight of a 50-55% vinyl acetate copolymer dispersion, whereby corn starch modified by oxidation is excluded.

8. A structural paste as claims in claim 7, characterised in that the polymer dispersion is a free-free dispersion of a vinyl acetate ethylene copolymer (EVA).

9. A structural paste as claimed in claim 7 or 8,characterised in that the inorganic filler materials are essentially Al(OH)₃ and/or CaCO₃.

10. A structural paste according to and least one of claims 7 through 9, characterized in that the fillers included up to 10 weight% of TiO2.

11. A structural paste according to at least one of claims 7 through 10, characterised in that the total filler material contains 25-40 weight% of unpasted starch as the organic filler, and as the remaining filler material essentiality Al(OH)₃ as the inorganic filler material.

12. A structural paste as claimed in at least one of claims 7 through 11, characterised in that it contains non-crystallising sorbite syrup or ethylene glycol as the process retarder.

13. A structural paste as claimed in claim 12, characterised in that it contains sorbite syrup in an amount of 1-8 weight%, referred to the total paste.

14. A structural paste as claimed in at least one of claims 7 through 13, characterised in that it contains micro-pearls as the expansion agent.

15. A structured paste according to claim 14, characterised in that the quantity of microbeads amounts to 1-8 weight % referred to the whole paste.

16. A structured paste according to claim 8, essentially containing:
240 - 360 parts by weight of a 50-55% softener-free EVA-dispersion
5 - 50 parts by weight non-crystallizing sorbic syrup
10 - 50 parts by weight microbeads
300 parts by weight Al(OH)₃ and non-agglutinated starch.
5 - 30 parts by weight water as viscosity adjusting means whereby the structural paste contains to 1 part by weight inorganic and organic filling material 0.8 to 2.0 part by weight of a 50-55% polymer dispersion.

17. A structural paste according to claim 16, characterised in that it contains 100 parts by weight of non-crystallized starch.

18. A structural paste according to claim 16 or 17, characterised in that it contains 5-25 parts by weight paraffin dispersion.

19. A structural paste according to claim 16, 17 or 18 characterised in that it contains additionally 5-30 parts by weight TiO₃ of the rutile type.

20. A structural paste according to claim 16, 17, 18 or 19 essentially containing:
280 parts by weight of a 50-55% softener-free EVA-dispersion
200 parts by weight Al(OH)₃ with a grain size distribution of 20-25 um
100 parts by weight of a non-agglutinated starch
20 parts by weight TiO₃ of the rutile type
37.5 parts by weight microbeads with a grain diameter of 10-20 um and an expansion ratio of 20
45 parts by weight of a non-crystallizing sorbic syrup
20 parts by weight paraffin dispension and
10 parts by weight water viscosity adjusting means

21. A structural paste according to claim 16, 17 and 18 essentially containing:
320 parts by weight of a 50-55% softener-free EVA-dispension:
200 parts by weight Al(OH)₃ with a grain size distribution 20-25 um
100 parts by weight of a non-agglutinated starch
15 parts by weight microbeads with a grain diameter of 10-20 um and an expansion-ratio of 20
10 parts by weight of a non-crystallizing sorbic syrup
7.5 parts by weight paraffin dispersion and
25 parts by weight water as viscosity adjusting means

22. A structural paste according to at least one of the claims 7 to 21, characterised in that it contains additionally dyes, colour pigments, biocides and/or foam removers.

23. The use of a structural paste according to at least one of the claims 7 to 22 for the manufacture of structural wall-papers.

## Revendications

1. Procédé pour fabriquer des revêtements à structuration superficielle tridimensionnelle pour murs et sols, en particulier de papiers peints structurés, dans lesquels une pâte de structuration est, par un procédé approprié d'application, appliquée selon la structure voulue sur un substrat en feuille continue, puis est fixé sur ce substrat en feuille continue, caractérisé en ce qu'on utilise une pâte de structuration à base d'une dispersion d'un copolymère d'acétate de vinyle, qui contient au moins une matière de charge minérale et au moins 10 % en poids, par rapport à la totalité des matières de charge, d'amidon non empâté servant de charge organique, et éventuellement des solvants et/ou diluants, la pâte de structuration contenant, pour 1 partie en poids de matières de charge minérales et organiques, de 0,8 à 2,0 parties en poids d'une dispersion à 50-55 % d'un copolymère d'acétate de vinyle, l'amidon de maïs modifié par oxydation étant exclu.

2. Procédé selon la revendication 1, caractérisé en ce qu'on utilise comme diluant de l'eau à l'aide de laquelle la viscosité de la pâte de structuration est ajustée à une viscosité convenant à la mise en oeuvre.

3. Procédé selon la revendication 1 ou 2, caractérisé an ce que l'application de la pâte de structuration sur le substrat en forme de feuille continue s'effectue par le procédé de sérigraphie à la rotative, le procédé de sérigraphie à plat, le procédé de rotogravure, le procédé d'héliogravure par exprimage, le procédé de typographie, un procédé par enduction ou un procédé par pulvérisation.

4. Procédé selon au moins l'une des revendications 1 à 3, caractérisé en ce que la pâte de structuration est solidifiée par séchage sur le substrat en forme de feuille continue.

5. Procédé selon la revendication 4, caractérisé en ce que le séchage a lieu à des températures de 40 à 200°C.

6. Procédé selon au moins l'une des revendications 1 à 5, caractérisé en ce que la pâte de structuration solidifiée est soumise à un traitement superficiel supplémentaire, en particulier une impression, un laquage et/ou un flocage.

7. Pâte de structuration contenant une dispersion polymère à base d'un copolymère d'acétate de vinyle, d'une matière de charge minérale et d'au moins 10 % en poids, par rapport au total des matières de charge, d'amidon non empâté servant de charge organique, et si nécessaire des solvants et/ou des diluants, la pâte de structuration contenant, pour 1 partie en poids de charges minérales et organiques, de 0,8 à 2,0 parties en poids d'une dispersion à 50-55 % d'un copolymère d'acétate de vinyle, l'amidon de maïs modifié par oxydation étant exclu.

8. Pâte de structuration selon la revendication 7, caractérisée en ce que la dispersion du polymère est une dispersion sans plastifiants d'un copolymère d'acétate de vinyle-éthylène (ENA).

9. Pâte de structuration selon la revendication 7 ou 8, caractérisée en ce que les matières de charge minérales sont pour l'essentiel constituées de Al(OH)₃ et/ou de CaCO₃.

10. Pâte de structuration selon au moins l'une des revendications 7 à 9, caractérisée en ce que les matières de charge contiennent jusqu'à 10 % en poids de TiO₂.

11. Pâte de structuration selon au moins l'une des revendications 7 à 10, caractérisée en ce que les matières de charge totales contiennent de 25 à 40 % en poids d'amidon non empâté servant de matière de charge organique, avec comme matière de charge restante, essentiellement de l'Al(OH)₃ servant de matière de charge minérale.

12. Pâte de structuration selon l'une des revendications 7 à 11, caractérisée en ce que, en tant que retardateur de mise en oeuvre, elle contient un sirop de sorbitol non cristallisable ou de l'éthylèneglycol.

13. Pâte de structuration selon la revendication 12, caractérisée en ce qu'elle contient le sirop de sorbitol en une quantité de 1 à 8 % en poids par rapport à la pâte totale.

14. Pâte de structuration selon au moins l'une des revendications 7 à 13, caractérisée en ce qu'elle contient des microperles en tant qu'agents d'expansion.

15. Pâte de structuration selon la revendication 14, caractérisée en ce que la quantité de microperles est de 1 à 8 % en poids par rapport à la pâte totale.

16. Pâte de structuration selon la revendication 8, contenant essentiellement :
240-360 p.p. d'une dispersion d'EVA à 50-55 % sans plastifiants
5-50 p.p. d'un sirop de sorbitol non cristallisable,
10-50 p.p. de microperles,
300 p.p. de Al(OH)₃ et d'amidon non empâté,
5-30 p.p. d'eau servant de régulateur de viscosité, la pâte de structuration contenant, pour 1 partie en poids de matières de charge minérales et organiques, de 0,8 à 2,0 parties en poids d'une dispersion de polymère à 50-55 %.

17. Pâte de structuration selon la revendication 16, caractérisée en ce qu'elle contient 100 p.p. d'amidon non empâté.

18. Pâte de structuration selon la revendication 16 ou 17, caractérisée en ce qu'elle contient de 5 à 25 p.p. d'une dispersion de paraffine.

19. Pâte de structuration selon la revendication 16, 17 ou 18, caractérisée en ce qu'elle contient en outre de 5 à 30 parties en poids de TiO₂ du type rutile.

20. Pâte de structuration selon la revendication 16, 17, 18 et 19, contenant essentiellement :
280 p.p. d'une dispersion d'EVA à 50-55 % sans plastifiants,
200 p.p. de Al(OH)₃, ayant une répartition granulométrique de 20-25 µm,
100 p.p. d'un amidon non empâté,
20 p.p. de TiO₂ du type rutile,
37,5 p.p. de microperles, ayant une granulométrie de 10 à 20 µm et un rapport de dilatation de 20,
45 p.p. d'un sirop de sorbitol non cristallisable,
20 p.p. d'une dispersion de paraffine, et
10 p.p. d'eau servant de régulateur de viscosité.

21. Pâte de structuration selon la revendication 16, 17 et 18, contenant essentiellement :
320 p.p. d'une dispersion d'EVA à 50-55 % sans plastifiant,
200 p.p. de Al(OH)₃ ayant une répartition granulométrique de 20-25 µm,
100 p.p. d'un amidon non empâté,
15 p.p. de microperles, ayant une granulométrie de 10 à 20 µm et un rapport de dilatation de 20,
10 p.p. d'un sirop de sorbitol non cristallisable,
7,5 p.p. d'une dispersion de paraffine, et
25 p.p. d'eau servant de régulateur de viscosité.

22. Pâte de structuration selon au moins l'une des revendications 7 à 21, caractérisée en ce qu'elle contient en outre des colorants, des pigments colorés, des biocides et/ou des antimoussants.

23. Utilisation d'une pâte de structuration selon au moins l'une des revendications 7 à 22, pour fabriquer des papiers peints structurés.
